# EUROPEAN PATENT SPECIFICATION

(11) **EP 1 773 590 B1**
(45) Date of publication and mention of the grant of the patent: **02.10.2013**
(21) Application number: 05778393.8
(22) Date of filing: 03.08.2005
(51) Int. Cl.: B32B 27/36, C08L 67/00

(54) **CONTAINERS INCORPORATING POLYESTER-CONTAINING MULTILAYER STRUCTURES**
BEHÄLTER ENTHALTEND MEHRSCHICHTSTRUKTUREN ENTHALTEND POLYESTER
CONTENEURS INCORPORANT DES STRUCTURES EN PLUSIEURS COUCHES CONTENANT DU POLYESTER

(30) Priority: 04.08.2004 US 598711 P
(43) Date of publication of application: 18.04.2007
(73) Proprietor: E.I. DU PONT DE NEMOURS AND COMPANY, Wilmington, DE 19898 (US)
(72) Inventor: BROWN, Michael, Joseph, Wilmington, Delaware 19806 (US)
(74) Representative: Dannenberger, Oliver Andre
(86) International application number: PCT/US2005/027613
(87) International publication number: WO 2006/017597

(56) References cited:
- WO-A-03/080731

## Description

This invention relates to a polyester composition comprising a sulfonic acid comonomer, to an article comprising or produced from the composition such as injection molded hollow articles used as bottle preforms and blown bottles, or coextruded or coinjected multilayer structures, and to packaged products.

### BACKGROUND OF THE INVENTION

The use of polyethylene terephthalate (PET) and similar materials as materials in the formation of numerous injection-molded articles is well known in the art. For example, in the bottle and container industry, the blow molding of injection molded PET preforms has gained wide acceptance. PET materials generally have high strength, high gloss, good clarity, and low gas permeation characteristics and are comparatively easy to recycle.

For some applications, containers made from PET may not provide adequate barriers to, for example, gas and/or moisture permeation into or out of the container. Other needs may include protection of the contents from degradation by visible and/or ultraviolet light. It is desirable to protect milk and other dairy products from visible and UV light and oxygen. One structure known in the art for milk bottles is a white/black/white high-density polyethylene (HDPE) multilayer structure for protection from UV and/or visible light.

Blends of polyester with other polymers may be used to provide improved barrier properties, but they are not suitable for conventional polymer recycling streams. Fillers such as titanium dioxide (TiO₂) can act as delustrants and adversely affect the "sparkle" of the PET.

Alternatively, multilayer structured have been developed to address the needs for improved barrier materials. Other desirable properties in a multilayer package include improved heat distortion and sealing characteristics and flexibility in creating colored packages.

Multilayer structures are often made with polymers having differing compositions that are incompatible with one another. The multilayer structures may therefore exhibit poor adhesion between the various layers, resulting in a poor packaging material. Many compositions under consideration in multilayer packaging are incompatible with polyesters such as PET and/or sufficiently different so they cannot be introduced into conventional polymer recycling streams without separation.

Multilayer structures comprising PET and various performance layers providing improved barrier properties are known. See, e.g., JP Patent 04051423 and Japanese Patent 2663578. See also PCT Publication WO99/58328.

WO 03/080731 discloses multilayered structures having a first layer comprising a compatibilized polymer blend comprising polyamide, PET or a PET-containing copolymer and at least one compatibilizer, and a second layer of polyester.

There is a need for multilayer structures with adequate interlayer adhesion and barrier properties during use that can be readily recycled after use. It is also desirable to provide bottles for milk and other dairy products comprising PET with improved protection from visible and UV light and oxygen that can be recycled.

### SUMMARY OF THE INVENTION

A container, that can be used for liquids comprising a multilayer structure that can provide good interlayer adhesion characteristics and barrier characteristics where the adhesion can be sufficient to prevent delamination of the layers during use and be adjusted to allow for delamination during recycling operations, comprises or can be produced from a polyester composition in which the adhesive strength can be adjusted by variation of the relative amounts of the components.

A coextruded or coinjected multilayer structure comprising or produced from at least one interior core layer adhered to at least one exterior layer comprising or produced from a copolymer, which comprises polyester and repeat units derived from 0.001 to 7 mole % of a sulfonic acid comonomer, wherein the structure is coextruded, coinjected, or combinations thereof; and the sulfonic acid comonomer includes sulfobenzenedicarboxylic acid, a salt of the acid, an ester of the acid, an ester of the salt, or combinations of two or more thereof, wherein the interior core layer comprises or is produced from polyamide, ethylene/vinyl alcohol copolymer, polyvinylidene chloride, ethylene vinyl acetate copolymer, ethylene/alkyl (meth)acrylate copolymer, polyolefins and polyolefin copolymer, polycarbonate, or combinations of two or more thereof.

For example, the sulfonic acid comonomer includes sulfobenzenedicarboxylic acid, a salt of the acid, an ester of the acid, an ester of the salt, or combinations of two or more thereof and the salt can be metal counterions such as calcium, zinc, sodium, or combinations of two or more thereof.

In a first embodiment, the sulfonic acid-derived polyester composition is prepared as a blend of bulk polyester and a copolymer of polyester and from 0.001 to 7, or 0.005 to 7, mole % of a sulfonic acid comonomer or a salt thereof. The blend ratio of bulk polymer to sulfonic acid-derived copolymer is from 0.1:99.9 to 99.9:0.1, preferably 75:25 to 99.9:0.1, and more preferably 85:15 to 99:1.

Preferably, the sulfonic acid comonomer is in the form of a salt with alkali, alkali metal or metal counterions, with calcium, zinc, lithium or sodium counterions preferred. Preferably, the sulfonic acid comonomer is present in an amount from 0.005 to 7 mole %, more preferably 0.025 to 2.5 mole %, of the copolymer and even more preferably 0.035 to 0.5 mole %, of the copolymer. Blending the copolymer with bulk polyester to a final compositional range of 0.005 to 0.25 mole % sulfonic acid with a particularly preferred target of 0.085 mole % (based on total moles of diacid monomer) produces a novel composition of matter particularly suitable for purposes of this invention. Prior to blending, the copolymer polyester containing a sulfonic acid comonomer or a salt thereof may have a sulfonic acid comonomer concentration greater than 0.25 mole% and preferably greater than 0.35 with a range of from 0.25 to 0.49 mole %. Thus starting with a copolymer of polyester containing 7 mole %, blending in a bulk polyester at a ratio of one hundred to one or even greater such as 0.25 to 0.49 mole %. The sulfonic acid comonomer, for example, can be present from .005 to .5 mol %, or <1% in the final composition such as in a block copolymer or a blend disclosed above. Also for example, a sulfonic acid-containing copolyester can comprise >.5% sulfonic acid up to 15% sulfonic acid in the copolyester (preferably .5 to 7% and more preferably 1 to 3%).

An example of a bulk polymer is a polyethylene terephthalate (PET) having a melt temperature (Tₘ) in a range from 230 °C to 258°C and an inherent viscosity (IV) from 0.58 and 1.1.

In a second embodiment, the sulfonic acid-derived polyester composition is prepared as a random copolyester comprising from 0.005 to 7 mole % of a sulfonic acid comonomer or a salt thereof. Preferably, the sulfonic acid comonomer is in the form of a salt with alkali, alkali metal or metal counterions, with calcium, zinc, lithium or sodium counterions preferred.

In a third embodiment, the sulfonic acid-derived polyester composition is prepared as a block copolyester comprising from 0.005 to 7 mole % of a sulfonic acid comonomer or a salt thereof. Preferably, the sulfonic acid comonomer is in the form of a salt with alkali, alkali metal or metal counterions, with calcium, zinc, lithium or sodium counterions preferred.

This invention also provides an injection molded hollow article comprising (a) at least one exterior layer comprising a sulfonic acid-derived polyester composition as defined above; and (b) at least one interior core layer as defined above.

A material suitable for use in the interior core layer of component (b) is a polymeric material selected from the group consisting of polyamides, ethylene/vinyl alcohol copolymers, polyvinylidene chloride, ethylene vinyl acetate copolymers, ethylene/alkyl (meth)acrylate copolymers, polyolefins and polyolefin copolymers, and polycarbonate.

A particular embodiment of this aspect of the invention is an injection molded hollow article comprising (a) at least one layer comprising a sulfonic acid-derived polyester composition as defined above; and (b) at least one polyamide layer.

The injection molded hollow article can be used as a preform, or parison, for blow molded bottles.

This invention also provides a blow molded bottle comprising
(a) at least one exterior layer comprising a sulfonic acid-derived polyester composition as defined above; and (b) at least one interior core layer as defined above.

A particular embodiment of this aspect of the invention is a blow molded bottle comprising (a) at least one layer comprising a sulfonic acid-derived polyester composition as defined above; and (b) at least one polyamide layer as defined above.

### DETAILED DESCRIPTION OF THE INVENTION

"Monomer" is a relatively simple compound, usually containing carbon and of low molecular weight, which can react to form a polymer by combining with like molecules or with other similar molecules or compounds. "Comonomer" is a monomer that is copolymerized with at least one different monomer in a copolymerization reaction, the result of which is a copolymer. "Polymer" is the product of a polymerization reaction, and is inclusive of homopolymers, copolymers, terpolymers, tetrapolymers, etc. The layers of a structure can consist essentially of a single polymer, or can have additional polymers together therewith, i.e., blended therewith.

"Homopolymer" is a polymer resulting from the polymerization of a single monomer, i.e., a polymer consisting essentially of a single type of repeating unit. "Copolymer" is a polymer formed by the polymerization reaction of at least two different monomers and includes a random copolymer, block copolymer, graft copolymer, or combinations of two or more thereof.

As used herein, terms identifying polymers, such as "polyamide", "polyester", "polyurethane", etc., are inclusive of not only polymers comprising repeating units derived from monomers known to polymerize to form a polymer of the named type, but are also inclusive of comonomers, derivatives, etc., that can copolymerize with monomers known to polymerize to produce the named polymer. For example, the term "polyamide" encompasses both polymers comprising repeating units derived from monomers, such as caprolactam, which polymerize to form a polyamide, as well as copolymers derived from the copolymerization of caprolactam with a comonomer which when polymerized alone does not result in the formation of a polyamide. Furthermore, terms identifying polymers are also inclusive of blends of such polymers with other polymers of a different type.

Polyesters may be nucleated to improve crystallinity and optical clarity. Nucleating agents may be incorporated into PET to promote temperature resistance. Polyesters with low glass transition temperatures (Tg) can be used as nucleating agents. Suitable nucleation agents also include salts of organic acids, such as sodium stearate.

Non-polyester polymers may be included in the compositions used to prepare the multilayer bottles to provide "pearlesence" upon orientation. For example, the non-polyester polymer may be an ionomeric resin, which are copolymers of an olefin such as ethylene and an unsaturated carboxylic acid, such as acrylic acid, methacrylic acid, or maleic acid, and optionally softening monomers, that have some portion of the acidic groups in the copolymer neutralized with metal ions such as sodium or zinc. lonomers are sold by E. I. du Pont de Nemours and Company (DuPont) such as "Surlyn^{®}".

In an embodiment, a blend of a PET homopolymer or copolymer having a melt temperature (Tₘ) in a range from about 230°C to 258°C and an inherent viscosity. (IV) from 0.58 to 1.1 with a copolymer of polyester and from 0.005 to 7 mole % of a sulfonic acid comonomer. PETs such as this are sometimes referred to as a "bottle resin" or "CPET resin" and include those such as "9921" from Voridian or "Laser +" from DAK Americas such as a bulk polyester comprising a PET homopolymer or copolymer with Tₘ in a range from 245°C to 258°C and an inherent viscosity (IV) from 0.67 to 1.1. A PET homopolymer or copolymer with Tₘ in a range from 245°C to 258°C and an inherent viscosity (IV) from 0.72 to 0.9 can be used.

The copolymer of polyester and a sulfonic acid comonomer used herein includes any polymer comprising (or derived from) terephthalic acid or a terephthalate diester such as dimethylterephthalate and ethylene glycol in amounts such that the copolymer comprises at least about 50 mole % ethylene terephthalate, and the remainder of the polymer being derived from comonomers comprising a sulfo (i.e. sulfonic acid) moiety, such as sulfoterephthalic acid or 5-sulfoisophthalic acid, their salts and/or ester forming equivalents thereof (SPET). Examples of sulfonic acid-containing polyester includes polyethylene terephthalate 5-sodium sulfoisophthalate terpolymer, a blend of polyethylene terephthalate 5-sodium sulfoisophthalate terpolymer and polyetherester elastomer block copolymer, a blend of polyethylene terephthalate 5-sodium sulfoisophthalate terpolymer and polyethylene terephthalate, a blend of polyethylene terephthalate 5-sodium sulfoisophthalate terpolymer and ethylene/acrylic acid copolymer and ethylene/methyl acrylate copolymer, a blend of polyethylene terephthalate 5-sodium sulfoisophthalate terpolymer and ethylene/acrylic acid copolymer and ethylene/n-butyl acrylate-copolymer.

The copolymer can be in the neutralized form (i.e. in the form of an alkali, alkali metal or metal salt). When in the salt form, these copolymers are also known as polyester ionomers, sulfonate polyesters or metal sulfonate polyesters. The term "sulfonic acid-containing polyester copolymer" is used herein to denote such copolymers, including the salt form. Suitable polyester ionomers can also be found in US Patent 6,437,054. A preferred comonomer is 5-sulfoisophthalic acid; an example of an ester forming equivalent thereof is the sodium salt of 5-sulfo-1,3-dimethyl ester 1,3-benzenedicarboxylic acid (also known as 5-sodium sulfodimethylisophthalate). Preferred is a polyester copolymer derived from copolymerization of ethylene glycol with terephthalic acid to 5-sulfoisophthalic acid (or equivalents, including esters and/or salts).

The copolymers of polyester and a sulfonic acid include random copolymers or block copolymers. Random copolymers are copolymers in which all the comonomers of the copolymer are mixed together simultaneously and condensed. This results in a random distribution of the sulfonic moiety through the copolymer. A block copolymer is prepared by mixing the terephthalic acid comonomer and the ethylene glycol comonomer and allowing them to partially condense prior to adding the sulfonic comonomer. The resulting block copolymer has "blocks" or regions of essentially homogeneous polyethylene terephthalate and regions wherein the sulfonic moieties are randomly distributed among the terephthalic and ethylene glycol moieties.

For example, a random or block copolymer can comprise 0.005 to 7 mole % (or more) of a sulfonic acid comonomer for blending with a bulk polyester to form a composition. The random or block copolymer may further include an oxygen scavenger.

"Inner layer," "interior layer" and "internal layer" refer to any layer of a multilayer structure having both of its principal surfaces directly adhered to another layer of the structure. "Outer layer" and "exterior layer" refer to any layer of a multilayer structure having less than two of its principal surfaces directly adhered to another layer of the structure. All multilayer structures have two, and only two, outer or exterior layers, each of which has a principal surface adhered to only one other layer of the multilayer structure. "Inside layer" refers to an outer or exterior layer of a multilayer structure for, for example, fluid transfer that is closest to the fluid relative to the other layers of the multilayer structure. "Inside layer" also refers to the innermost layer of a plurality of concentrically arranged layers simultaneously coextruded through a profile die. An inside layer is used with reference to the layer that forms the surface of the inside of the profile or tubing. "Outside layer" refers to the outer layer of a multilayer structure for fluid transfer that is farthest from the fluid relative to the other layers of the multilayer structure. "Outside layer" also is used with reference to the outermost layer of a plurality of concentrically arranged layers simultaneously coextruded through a profile die. An outside layer is used with reference to the layer that forms the surface of the outside of the profile or tubing.

"Directly adhered", as applied to layers, is adhesion of the subject layer to the object layer, without an intervening tie layer, adhesive layer, or other layer. In contrast, as used herein, the word "between", as applied to a layer expressed as being between two other specified layers, includes both direct adherence of the subject layer between to the two other layers it is between, as well as including a lack of direct adherence to either or both of the two other layers the subject layer is between, i.e., one or more additional layers can be imposed between the subject layer and one or more of the layers the subject layer is between.

The term "core" and "core layer", as applied to multilayer structures, respectively refers to any interior layer that has a primary function other than serving as an adhesive or compatibilizer for adhering two layers to one another. The core layer or layers can provide the multilayer structure with a desired level of strength (i.e., modulus) and/or optics, and/or added abuse resistance, and/or specific impermeability.

"Tie layer" or "adhesive layer" refer to any interior layer having the primary purpose of adhering two layers to one another. Tie layers can comprise any polymer having a polar group thereon, or any other polymer that provides sufficient interlayer adhesion to adjacent layers comprising otherwise non-adhering polymers.

Tie layer compositions can include those sulfonic acid-derived polyester compositions disclosed above. They may also include blends of sulfonic acid-derived copolymers with PET (e.g., PET having a high IV and/or a branched PET and/or copolyesters). The compositions may also be toughened and/or nucleated as described above (e.g., inclusion of 18 weight % EnBAGMA and/or a sodium salt of an organic acid to provide 1000 ppm Na⁺). Although the compositions are generally described herein as containing sodium counterions, other counterions such as lithium, calcium and zinc may be used. Low-melting SIPA-PET copolymers may be particularly useful in some multilayer structures.

A polyester or copolyester, whether it comprises repeat units derived from a sulfonic acid or not, can comprise repeat units derived from an acid including terephthalic acid, isophthalic acid, naphthalene dicarboxylic acid, azelaic acid, sebacic acid, glutaric acid, or combinations of two or more thereof; and from a diol including ethylene glycol, propylene glycol, butane diol, cyclohexane-dimethanol, isosorbide, polyethylene glycol, or combinations of two or more thereof; and optionally from a branching agent including trimellitic acid, pentaerythritol, or combinations thereof.

"Bulk layer" refers to any layer of a structure that is present for the purpose of increasing the abuse-resistance, toughness, modulus, etc., of a multilayer structure. Bulk layers can comprise polymers that are generally inexpensive relative to other polymers in the structure that provide some specific purpose unrelated to abuse-resistance, modulus, etc.

"Barrier" and "barrier layer", as applied to multilayer structures, refer to the ability of a structure or layer to serve as a barrier to one or more gases. In the packaging art, oxygen (i.e., gaseous O₂) barrier layers include, e.g., hydrolyzed or saponified ethylene/vinyl acetate copolymer ("HEVA", also referred to as ethylene/vinyl alcohol copolymer (EVOH)), polyalcohol ethers, polyvinylidene chloride, polyamides, polyacrylonitrile, polyesters, wholly aromatic polyesters, resorcinol diacetic acid-based copolyesters, polyalcohol amines, isophthalate-containing polyesters, polyethylene naphthalate (PEN) and PEN copolymers and mixtures thereof, etc., as known to those of skill in the art. These materials may be used neat or further modified to improve their physical properties, such as with the addition of nanoparticles (to improve barrier), such as those available from Nanocor, Southern Clay Products, Rheox and others.

"Skin layer" refers to an outside layer of a profiled multilayer structure, this skin layer being subject to abuse.

"Fluid- or product-contact layer" refers to a layer of a multilayer structure such as tubing that is in direct contact with the fluid product being held or transferred in the tubing. In a multilayer structure, a product-contact layer is always an outer layer. The product-contact layer is an inside layer (i.e., innermost layer) of the package, in direct contact with the product.

The multilayer structure can comprise at least one exterior layer comprising a sulfonic acid-derived polyester composition and at least one interior core layer. A multilayer structure can comprise at least three layers. The invention is not restricted in the numbers of materials and layers to be molded.

An embodiment of a multilayer structure is a two-material, three-layer structure that can be injection molded as a bottle preform and then blow molded into a bottle. In this embodiment, the two exterior layers comprise a sulfonic acid-derived polyester composition as described above and the interior layer comprises a different material, such as a barrier material. For articles such as preforms and bottles, one exterior layer provides the outside surface of the article and the other exterior layer provides the inside surface of the article.

The invention is also quite useful, for example, in three-material, four-or five-layer structures as well. In this embodiment of the invention where three materials form a four-layer object, typical applications would be for a plastic container composed of two interior layers; one layer would usually be selected for its gas barrier for gas scavenger properties, and the other interior layer would be selected for some other property such as a structural layer or a recycled layer. The layers adjacent to the core/barrier layer comprise a sulfonic acid-derived polyester composition as described above. For articles such as preforms and bottles, one exterior layer provides the outside surface of the article and the other exterior layer provides the inside surface of the article.

One of the purposes for interior core layers is as a barrier layer, where a humidity sensitive barrier layer may be required within the molded article such as a cylindrical bottle, container or the like. It may be advantageous to shift the barrier layer towards the outside walls of the container, away from the liquid content and thus at a lower relative humidity environment that can enhance the performance of the barrier layer and even require less volume of barrier material in order to provide the same barrier effect to the contents. Another illustration is for use of oxygen scavenging layers, the scavenging capacities of which may be increased by being in a higher relative humidity and/or being closer to the contents as opposed to being close to the outside wall. A thicker container outer layer, moreover, would permit less oxygen permeation than if the outer layer were thinner, slowing down oxygen transfer from the outside to the scavenging layer. The scavenging capacity of a scavenging layer closer to the contents would also remove residual oxygen left in the polyester resin and in the contents of the container during the filling process.

In a particular embodiment, the interior core layer is a barrier layer and comprises or is produced from one or more polyamides (nylons), ethylene/vinyl alcohol copolymers (EVOH), polyvinylidene chloride, polycarbonate, or combinations of two of more thereof and can include a scavenger materials such as BP-Amoco "Amasorb", and compounds of heavy metals like cobalt with MXD6 nylon (i.e., polymetaxylene adipate homo- and/or co-polyamide) or EVOH wherein the cobalt makes the nylon or EVOH reactive to oxygen, as in chemical scavenging reaction therewith, rather than allowing oxygen permeation through the materials. Combinations of barrier materials with such scavengers may provide both barrier and scavenger properties. The incorporation of metal powders in the polymer can provide electro-magnetic energy barrier layers.

"EVOH" refers to an ethylene/vinyl alcohol copolymer, includes saponified or hydrolyzed ethylene/vinyl acetate copolymers, refers to a vinyl alcohol copolymer having 27 to 44 mole % ethylene, and is prepared by, e.g., hydrolysis of vinyl acetate copolymers. The degree of hydrolysis is preferably from 50 to 100 mole %, or 85 to 100 mole %. EVOH is available as Eval^{®} from Kuraray (Evalca) and Noltex^{®} from Nippon Goshei.

Polyamide can include polyamide 6, polyamide 9, polyamide 10, polyamide 11, polyamide 12, polyamide 6,6, polyamide 6,10, polyamide 6,12, polyamide 61, polyamide 6T, polyamide 6I 6T, polyamide 6,9, as well as polyamides prepared from terephthalic acid and/or isophthalic acid and trimethylhexamethylenediamine, from adipic acid, azelaic acid, 2,2-bis-(p-aminocyclohexyl)propane, from terephthalic acid and 4,4'-diaminocyclo-hexylmethane, or combinations of two or more thereof.

Polyamides may be made by any method known to one skilled in the art, including the polymerization of a monoamino monocarboxylic acid or a lactam thereof having at least two carbon atoms between the amino group and carboxylic acid group, of substantially equimolar proportions of a diamine which contains at least two carbon atoms between the amino groups and a dicarboxylic acid, or of a monoaminocarboxylic acid or a lactam thereof as define above, together with substantially equimolar portions of a diamine and a dicarboxylic acid. This dicarboxylic acid may be used in the form of a functional derivative thereof, for example, a salt, an ester or acid chloride. See, e.g., US Patents 4,755,566; 4,732,938; 4,659,760; and 4,315,086. The polyamide used may also be one or more of those referred to as "toughened nylons," which are often prepared by blending one or more polyamides with one or more polymeric or copolymeric elastomeric toughening agents. Examples of these types of materials are given in, e.g., US Patents 4,174,358; 4,474,927; 4,346,194; 4,251,644; 3,884,882; and 4,147,740. Because such methods are well known, the description of which is omitted herein for the interest of brevity.

The polyamide includes polyamide 6, polyamide 9, polyamide 10, polyamide 11, polyamide 12, polyamide 6,6, polyamide 6,10, polyamide 6,12, polyamide 61, polyamide 6T, polyamide 6I 6T, polyamide MXD6 (i.e., polymetaxylene adipate homo- and/or co-polyamides), polyamide 6,9, a copolymer thereof, polyamides prepared from terephthalic acid and/or isophthalic acid and trimethylhexamethylenediamine; from adipic acid, azelaic acid, 2,2-bis-(p-aminocyclohexyl)propane; from adipic acid and *m-*xylene diamine; and from terephthalic acid and 4,4'-diaminocyclohexyl-methane, or combinations of two or more thereof including polyamide nanocomposites such as those available commercially as Aegis™ from Honeywell or Imperm™ from Mitsubishi Gas Chemicals/Nanocor.

Appropriate amounts of various additives can be present in the compositions, and structure layers thereof, including tie layers and the like. The additives include antioxidants, radiation stabilizers, thermal stabilizers, and ultraviolet (UV) light stabilizers, colorants, pigments or dyes, fillers, delustrants such as TiO₂, anti-slip agents, slip agents such as talc, plasticizers, anti-block agents, antistatic agents, other processing aids, elastomers, or combinations of two or more thereof.

These materials can also be colored or pigmented with opacifiers, colorants, pigments or dyes, to add additional functionality in aesthetics or light barrier. Fillers such as titanium dioxide (TiO₂) and carbon black are suitable opacifying agents, with TiO₂ preferred since it provides a white color to provide opacity for protection from UV and visible light and since it is easier to color the exterior layer as compared to making it black. TiO₂ can also be used as a white pigment in exterior layers. Similarly, carbon black is useful as a black pigment to provide opacity for the same purpose. Liquid colorants are available from suppliers such as Colormatrix or Holland Colors.

The multilayer structure can comprise at least one exterior layer comprising polyester and at least one opaque interior core layer as defined above, or at least three layers. The invention is not restricted in the numbers of materials and layers to be molded, but symmetric structures (i.e. having sequences of layers that are identical on both sides of a central core layer) such as 3-, 5- and 7-layer symmetric structures.

An embodiment of a Multilayer structure of this invention is a two-material, three-layer structure that can be injection molded as a bottle preform and then blow molded into a bottle. In this embodiment, the two exterior layers comprise a sulfonic acid-derived polyester composition and the interior layer comprises a different material as defined above, such as a barrier material. For articles such as preforms and bottles, one exterior layer provides the outside surface of the article and the other exterior layer provides the inside surface of the article.

Examples of such three-layer structures that comprise a sulfonic acid-derived polyester composition (SPET) as the polymeric material in both exterior layers and a non-polyester barrier layers include:
SPET/polyamide MXD6/SPET;
SPET/polyamide 6/SPET;
SPET/polyamide 6,6/SPET;
SPET/polyamide blends of 6 and 6I,6T/SPET;
SPET/polyamide 6I,6T/SPET; and
SPET/polyamide 6/6,6/SPET; and
SPET/(EVOH)/SPET.

The SPET or polyamide layers can be pigmented in any color, if desired. Any of the above can also be in 5-layer symmetric structures where a layer of the same composition as the exterior layers is a central interior layer with a layer of a different composition between the central interior layer, and each exterior layer. Additives such as colorants, opacifying agents, and/or fillers could be in any or all of the inner layers. For recycling, the color is preferably in layers 2 and/or 4 and in a material such as polyamide or EVOH.

The invention can also be useful in three-material, four- or five-layer structures such as a plastic container composing two types of interior layers surrounding a central interior structure layer of a polyester composition; one layer can be for its gas barrier or gas scavenger properties, and the other interior layer can be selected for its UV and visible light protection and/or for some other property such as a structural layer or a recycled layer. The exterior layers can comprise a polyester composition. For articles such as preforms and bottles, one exterior layer provides the outside surface of the article and the other exterior layer provides the inside surface of the article. In another embodiment, the barrier layer can also serve as the color/light barrier layer.

An example of a five-layer structure, includes:
SPET/(polyamide 6 blends with polyamide 6I,6T)/EVOH/(polyamide 6 blends with polyamide 6I,6T)/SPET

An example of a seven-layer structure, includes:
PET/SPET/polyamide/EVOH/polyamide/SPET/PET
In the seven-layer case it is not required that the SPET layer be an exterior layer.

One interior core layers can be a humidity sensitive barrier layer within the molded article such as a cylindrical bottle, container or the like. It may shift the barrier layer towards the outside walls of the container, away from the liquid content and thus at a lower relative humidity environment that can enhance the performance of the barrier layer to reduce the volume of barrier material to provide the same barrier effect to the contents. Another illustration is for use of oxygen scavenging layers, the scavenging capacities of which may be increased by being in a higher relative humidity and/or being closer to the contents as opposed to being close to the outside wall. A thicker container outer layer, moreover, may permit less oxygen permeation than if the outer layer were thinner, slowing down oxygen transfer from the outside to the scavenging layer. The scavenging capacity of a scavenging layer closer to the contents would also remove residual oxygen left in the contents of the container during the filling process.

Hot fill bottles are bottles that are filled with heated liquids and the bottle structure may resist to deformation or other deleterious effects when filled with a heated liquid.

Typical hot fill bottles may have a structure selected from the following:
SPET/ high temperature resin/SPET; and
SPET/high temperature resin/SPET/high temperature resin/SPET

The high temperature resin can be stretched in the orientation range of the PET. Branched PET could advantageously help maintain wall distribution when blowing bottles at the high end of the orientation temperature window.

Temperature resistant resins (high temperature resins) include amorphous nylon, such as Selar^{®} PA, available from DuPont and blends of amorphous nylon with other polyamides such as nylon 6, nylon 6,6, polyamide 61, polyamide 6I,6T, or MXD6 nylon.

Oxygen scavengers can be included in the temperature resistant layer.

A representative for producing a SPET container can include (i) injection molding or extrusion molding a closed-bottom hollow preform; (ii) reheating the preform to the blow molding temperature, normally from 10°C to 40°C (18°F to 72°F) above the glass transition temperature range of the bulk preform material; (iii) stretching the preform axially in the blow mold by means of a stretch rod; and (iv) simultaneously with the axial stretching, introducing compressed air into the preform so as to biaxially expand the preform outwardly against the walls of the blow mold so that it assumes the desired configuration.

Injection molded preforms adapted for subsequent blow molding into a finally desired container form may include mostly amorphous material allowing the preform to be blow-molded into a desired shape easily and with a minimum of reheating and avoiding the formation of undesirable cracks or haziness in the finished article/preform caused by the presence of excessive crystallized material therein. Further, the article/preform may have an acceptable level of acetaldehyde (a common degradation product of molten polyester), and be free from contaminants or defects.

Injection molding of preforms for later blow molding into container configurations can include some balancing of factors. See, e.g., Blow Molding Handbook, by Rosato and Rosato, Hanser Publishers, New York, N.Y., 1988. See also, US Patents 5,914,138; 6,596,213; 5,914,138; and 6,596,213.

Injection molding a bottle preform can be conducted by transporting a molten material of the various layers into a mold and allowing the molten materials to cool. The mold includes a first cavity extending inwardly from an outer surface of the mold to an inner end, an article formation cavity, and a gate connecting the first cavity to the article formation cavity. The gate defines an inlet orifice in the inner end of the first cavity, and an outlet orifice that opens into the article formation cavity. The article formation cavity typically may be cylindrical (but other profiles are contemplated) with an axially centered projection at the end opposite the gate. The molten material flows through the gate into the cavity, filling the cavity. The molding may provide an article that is substantially a tube with an "open" end and a "closed" end encompassing a hollow volume. The open end may provide the neck of the bottle and the closed end may provide the base of the bottle after subsequent blow molding. The molding may be such that various flanges and protrusions at the open end provide strengthening ribs and/or closure means, for example screw threads, for a cap. Parison programming to change wall thickness and die shaping to adjust wall distribution, mainly for non-round containers, may be used to modify the resultant parison for improved blow molding performance.

Transporting the material extends from a melt source to the vicinity of the inlet orifice of the gate and includes an elongated bushing residing at least partially within the first cavity. This bushing defines an elongated, axial passageway there through that terminates at a discharge orifice. A gate area, therefore, is defined by the assembled mold and bushing between the discharge orifice of the bushing and the outlet orifice of the gate. Ideally, this gate area is the portion of the system/apparatus in which the transition of the material from the molten phase present in the "runnerless" injection apparatus to the glassy phase of the completed article occurs during the time period between sequential "shots" of material.

During the injection of a "shot" of molten material (i.e., melt), the melt can flow from the discharge orifice of the bushing, through the gap between the discharge orifice of the bushing and the inlet of the gate, through the gate, and into the article formation cavity of the mold. Because the temperature is maintained above its maximum crystal melt temperature in the bushing, and the temperature of the mold is maintained well below the minimum glass transition temperature of the material, the majority of each shot cools quickly to its glassy state in the article formation cavity of mold. This results in the preform having low crystallinity levels (i.e., an article made up of substantially amorphous PET or other similar crystallizable polymer) because the material temperature does not remain within its characteristic crystallization range for any appreciable length of time.

At the end of each "shot" injection pressure commonly is maintained on the melt for between about 1 and 5 seconds in order to assure that the melt is appropriately packed into the article formation cavity of the mold. Thereafter, the injection pressure on the melt is released, and the article is allowed to cool in the mold for between 10 and 20 seconds. Subsequently, the mold is opened, the article is ejected therefrom, and the mold is reclosed. The latter steps take on the order of about 10 seconds. The temperature of the melt material may transition in the gate area of the system/apparatus during the time interval between successive material "shots" between its molten phase temperature and its glassy (rigid) phase temperature in a controlled manner.

For a multylayer preform molding, the molten materials may be injected into the mold from an annular die such that they form a laminar flow of concentric layers. For example, a three-layer preform, the inside layer and the outside layer comprise a polyester composition and the interior layer comprises a different material such as, for example, a barrier material. The molten materials are introduced into the mold such that the material for the outside layer and the inside layer enter the mold cavity before the material for the interior layer enters and form a leading edge of the laminar flow through the cavity. For a period of time, the three layers enter the mold cavity in a three-layer concentric laminar flow. Next, flow of the material for the interior layer is halted and the material for the outside and inside layers provides a trailing edge of the laminar flow. The flow continues until the entire cavity is filled and the trailing edge seals or fuses to itself at the gate area to form the closed end of the preform. The molding process for a three-material, four-layer preform is similar except that two different materials are provided for the two interior layers.

Positioning of the various layers in a cross-section of the preform can be adjusted by controlling relative volumetric flow rates of the inside and outside layers to enable relative shifting of the position of the core, and also the relative thickness of the inside and outside layers in the molded articles (see US 6,596,213).

Molding of three materials to form a four-layer or five-layer object can include a plastic container comprising two interior layers (one layer selected for its gas barrier or gas scavenger properties, and the other interior layer selected for its UV protection or for some other property such as a structural layer or a recycled layer). In a 5-layer object, an additional interior structural layer can be between these interior layers. The leading edge of gas barrier and/or gas scavenger property may prefer that one of the two interior layers be uniform in its penetration around the circumference of the molded object. This uniform penetration can be achieved by starting the flow of this one interior layer before starting the flow of the second interior layer, so that the leading edge of this first-flowing interior layer starts on the zero gradient of the velocity profile. Subsequent initiation of the flow of the second interior layer offsets the later-flowing portions of the first interior material from the zero gradient, but the uniform leading edge is established by the initial flow of the first interior layer on the zero gradient. Three material, five-layer objects can be prepared using similar considerations, except an additional interior polyester layer would be positioned between the two aforementioned interior layers.

Such relative thickness and position of each of the interior layers can be chosen to enhance the properties of the final molded object. For example, if one of the interior layers is a gas scavenger, the chosen position of the gas scavenger layer may be the innermost interior layer to reduce the permeation rate of gas through the outer layers of the container into the scavenger, and to increase the rate of gas scavenging from the contents of the container. Such a position may extend the shelf life of the container contents if the purpose of the scavenger layer is to absorb gas permeating from the atmosphere exterior to the container. As another example, the position of outermost interior layer can enhance the performance of a humidity-sensitive gas barrier layer, such as the beforementioned EVOH or MXD6 nylon, by moving such barrier layer away from the 100% relative humidity of the contents of a beverage that is to fill the container to a position in the wall that is closer to the lower relative humidity of the atmosphere surrounding the container.

Bottles can be manufactured by injection blow molding or extrusion blow molding. To prepare a bottle of this invention, the preform can be reheated and biaxially expanded by simultaneous axial stretching and blowing (as summarized above) in a shaped mold so that it assumes the desired configuration. The neck region is unaffected by the blow molding operation while the bottom and particularly the walls of the preform are stretched and thinned. The resulting thickness of the exterior layers and the interior layers may provide sufficient strength and barrier properties to allow the bottle to contain and protect the product packaged within.

The bottles can be useful for packaging liquids such as carbonated beverages, beer, juices, isotonic beverages, milk and other dairy products, and the like. Milk requires protection from oxygen and ultraviolet and/or visible light. Carbonated beverages require a barrier that prevents carbon dioxide from permeating out of the bottle. In addition to preventing carbon dioxide from permeating out of the bottle, a beer bottle also requires oxygen and light (especially UV) barriers. In the case of a PET beer bottle even dissolved oxygen in polymer represents a potential taste problem which can be alleviated with oxygen scavenger at as little as 15% of the sulfonic acid comonomer content. Juices and isotonic beverages also require protection from oxygen. Other liquids that may be packaged in bottles of this invention include edible oils, syrups, sauces, purees such as baby foods, and pharmaceuticals. Motor oil, fuels such as gasoline, soaps, detergents, agrochemical products, and the like may also be packaged. Powders, granules and other flowable solids may also be packaged in bottles of this invention. Some of the products may be heated when placed into the bottles of this invention (i.e., hot filled).

Although containers are generally described herein as bottles, other containers such as vials, jars, drums and fuel tanks may be prepared as described herein from the compositions and articles of this invention. Other articles, such as toys, panels, furniture and automotive parts may also be prepared similarly.

The following Examples are merely illustrative, and are not to be construed as limiting the scope of the invention.

Unless stated otherwise, all percentages, parts, etc. are by weight.

### EXAMPLES

Polyester compositions comprising a sulfonic acid comonomer or a salt thereof were prepared according to standard methods.

### Example 1

This example was a copolyester of terephthalic acid (or dimethyl terephthalate), ethylene glycol and 5-sodium sulfodimethylisophthalate (1.7 mole % based on the acid component). The IV of the copolymer was 0.56.

### Other Materials used

PET-1 : A PET composition having a melt temperature (Tₘ) of about 252 °C and inherent viscosity of 0.83, density of 1.39 g/cc and apparent bulk density of 0.83 g/cc, available under the KoSa™ 1101 tradename from Bamberger Polymers.

PA-1: An MXD6 polyamide available under the tradename MX 6007 from Mitsubishi Gas Chemicals/Nanocor.

EVOH-1: An ethylene-vinyl alcohol copolymer containing about 32 mole % ethylene available under the tradename Eval™ F101 from Kuraray (Evalca).

EMAMA-1: A maleic anhydride-modified ethylene/methyl acrylate graft copolymer, available from DuPont such as Bynel^{®} 22E810.

### Examples 2 - 5

Blend compositions were prepared by dry blending various amounts of the Example 1 composition with PET-1. The compositions are listed in Table 1.

**Table 1**

| Example | Example 1 concentration (weight %) |
|---|---|
| 2 | 2.5 |
| 3 | 5 |
| 4 | 1.5 |
| 5 | 10 |

### Examples 6 - 10

The blend compositions reported in Table 1 (Examples 2 through 5) and a polyamide composition were injection molded as described above using standard conditions to produce a three-layer bottle preform having the blend compositions as exterior bulk layers and the polyamide composition as an interior barrier layer. The structures are shown in Table 2, with numbers in ( ) indicating weight %. Comparative Examples C1, C2 and C3 were prepared similarly.

**Table 2**

| Example | Exterior Bulk Layer Composition | Interior Barrier Layer Composition |
|---|---|---|
| 6 | Example 2 | PA-1 |
| 7 | Example 3 | PA-1 |
| 8 | Example 4 | PA-1 |
| 9 | Example 5 | PA-1 |
| 10 | Example 2 | PA-1 (75) + EMAMA-1 (25) |
| C1 | PET-1 | PET-1 |
| C2 | PET-1 | PA-1 |
| C3 | PET-1 | PA-1 (75) + EMAMA-1 (25) |

### Example 11

The blend composition reported in Table 1 (Examples 5) and the EVOH-1 composition was injection molded as described above using standard conditions to produce a three-layer bottle preform having the blend composition as exterior bulk layer and the EVOH-1 composition as an interior barrier layer. The structure is shown in Table 3. Comparative Example C4 is prepared similarly.

**Table 3**

| Example | Exterior Bulk Layer Composition | Interior Barrier Layer Composition |
|---|---|---|
| 11 | Example 5 | EVOH-1 |
| C4 | PET-1 | EVOH-1 |

### Examples 12 - 20

The preforms listed in Tables 2 and 3 were blow molded as described above using standard conditions to provide a blow molded bottle having nominal side-wall thickness of 5 mil/0.5 mil/5 mil for the three layers.

Adhesion Strength: To test interlayer adhesion strength strips were cut from near the center of the sidewall of the blown bottle. Alternatively, multilayer sheets having the same structure and thickness were prepared by coextrusion to provide samples for adhesion testing. The layers were separated at the exterior/interior layer interface and pulled to assess the interlayer adhesion.

Alternately, Multilayer preforms were cut along the length of the preform to produce a "u" shaped cross section approximately 0,635 cm (0.25") wide. The "u" cross section is held at both ends and a twisting force is applied. Examples C2, C3 & C4 were easily delaminated in this manner. Examples 6, 7 & 9 were extremely difficult to separate even when a knife point was used to initiate separation. Example 8 was more difficult to separate than the control C2 but not as difficult to separate as examples 6, 7 or 9.

## Claims

1. A multilayer structure comprising or produced from at least one interior core layer adhered to at least one exterior layer comprising or produced from a copolymer, which comprises polyester and repeat units derived from 0.001 to 7 mole % of a sulfonic acid comonomer, wherein the structure is coextruded, coinjected, or combinations thereof; and the sulfonic acid comonomer includes sulfobenzenedicarboxylic acid, a salt of the acid, an ester of the acid, an ester of the salt, or combinations of two or more thereof, wherein the interior core layer comprises or is produced from polyamide, ethylene/vinyl alcohol copolymer, polyvinylidene chloride, ethylene vinyl acetate copolymer, ethylene/alkyl (meth)acrylate copolymer, polyolefins and polyolefin copolymer, polycarbonate, or combinations of two or more thereof.

2. The structure of claim 1 wherein the exterior layer comprises or is produced from (1) the copolymer, (2) a blend of bulk polyester and the copolymer, or combinations of (1) and (2); and the sulfonic acid comonomer is a metal salt of the acid and the metal salt includes calcium salt, zinc salt, lithium salt, sodium salt, or combinations of two or more thereof and the ratio of the bulk polyester to the copolymer is preferably from 0.1: 99.9 to 99.9:0.1 or 75:25 to 99.9:0.1.

3. The structure of claim 2 wherein the bulk polymer includes a composition comprising at least about 65 weight %, or at least about 80 weight %, polyethylene terephthalate homopolymer, polyethylene terephthalate copolymer, or combinations thereof.

4. The structure of claim 3 wherein the polyethylene terephthalate homopolymer or polyethylene terephthalate copolymer has a melt temperature ranging from 230°C to 258°C or 245°C to 258°C and an inherent viscosity ranging from 0.58 to 1.1 or 0.67 to 0.9 or 0.67 to 1.1.

5. The structure of claim 1, 2, 3, or 4 wherein the copolymer includes a random copolyester, a block copolyester, or combinations thereof.

6. The structure of claim 1, 2, 3, 4, or 5 comprising or produced from at least one layer comprising or produced from the copolymer; and at least one layer comprising or produced from polyamide, an ethylene/vinyl alcohol copolymer, or combinations thereof wherein the polyamide includes polyamide 6, polyamide 9, polyamide 10, polyamide 11, polyamide 12, polyamide 6,6, polyamide 6,10, polyamide 6,12, polyamide 6/6,6, polyamide 6I, polyamide 6T, polyamide 6I,6T, polyamide 6,9, polyamide MXD6, copolymer of polyamide MXD6, polyamide nanocomposite, or combinations of two or more thereof.

7. The structure of claim 1, 2, 3, 4, or 5 comprising or produced from at least one layer comprising or produced from the copolymer and at least one layer comprising or produced from polyamide including polyamide 6, polyamide 6,6, polyamide 6I,6T, polyamide MXD6, polyamide 6/6,6, and polyamide nanocomposites wherein the copolymer includes polyethylene terephthalate 5-sodium sulfoisophthalate terpolymer, a blend of polyethylene terephthalate 5-sodium sulfoisophthalate terpolymer and polyetherester elastomer block copolymer, a blend of polyethylene terephthalate 5-sodium sulfoisophthalate terpolymer and polyethylene terephthalate, a blend of polyethylene terephthalate 5-sodium sulfoisophthalate terpolymer and ethylene/acrylic acid copolymer and ethylene/methyl acrylate copolymer, a blend of polyethylene terephthalate 5-sodium sulfoisophthalate terpolymer and ethylene/acrylic acid copolymer and ethylene/n-butyl acrylate copolymer.

8. The structure of claim 1, 2, 3, 4, or 5 comprising or produced from at least one layer comprising or produced from the copolymer, and at least one layer comprising or produced from an ethylene/vinyl alcohol copolymer.

9. An article comprising or produced from a multilayer structure wherein the article is injection molded hollow article, blow molded bottle, or both; the structure is as **characterized in** claim 1, 2, 3, 4, 5, 6, 7, or 8; and the article, the structure, or both optionally comprises at least one oxygen scavenger.

## Patentansprüche

1. Mehrschichtstruktur, die mindestens eine innere Kernschicht umfasst oder daraus hergestellt ist, die an mindestens einer Außenschicht befestigt ist, die ein Copolymer umfasst oder daraus hergestellt ist, das Polyester und Wiederholungseinheiten umfasst, die von 0,001 bis 7 Mol-% eines Sulfonsäuremonomers abgeleitet sind, wobei die Struktur koextrudiert, koinjiziert, oder Kombinationen davon, ist; und das Sulfonsäurecomonomer Sulfobenzoldicarbonsäure, ein Salz der Säure, einen Ester der Säure, einen Ester des Salzes oder Kombinationen von zwei oder mehreren davon umfasst, wobei die innere Kernschicht Polyamid, Ethylen-Vinylalkohol-Copolymer, Polyvinylidenchlorid, Ethylenvinylacetatcopolymer, Ethylen-Alkyl(meth)acrylat-Copolymer, Polyolefine und Polyolefincopolymer, Polycarbonat oder Kombinationen von zwei oder mehreren davon umfasst oder daraus hergestellt ist.

2. Struktur nach Anspruch 1, wobei die Außenschicht (1) das Copolymer, (2) eine Mischung von Blockpolyester und dem Copolymer oder Kombinationen von (1) und (2) umfasst oder daraus hergestellt ist; und das Sulfonsäurecomonomer ein Metallsalz der Säure ist und das Metallsalz Calciumsalz, Zinksalz, Lithiumsalz, Natriumsalz oder Kombinationen von zwei oder mehreren davon umfasst und das Verhältnis des Blockpolyesters zum Copolymer bevorzugt 0,1:99,9 bis 99,9:0,1 oder 75:25 bis 99,9:0,1 beträgt.

3. Struktur nach Anspruch 2, wobei das Blockpolymer eine Zusammensetzung umfasst, die mindestens etwa 65 Gew.-% oder mindestens etwa 80 Gew.-% Polyethylenterephthalat-Homopolymer, Polyethylenterephthalat-Copolymer oder Kombinationen davon umfasst.

4. Struktur nach Anspruch 3, wobei das Polyethylenterephthalat-Homopolymer oder Polyethylenterephthalat-Copolymer eine Schmelztemperatur im Bereich von 230 °C bis 258 °C oder 245 °C bis 258 °C und eine inhärente Viskosität im Bereich von 0,58 bis 1,1 oder 0,67 bis 0,9 oder 0,67 bis 1,1 aufweist.

5. Struktur nach Anspruch 1, 2, 3 oder 4, wobei das Copolymer einen statistischen Copolyester, einen Blockcopolyester oder Kombinationen davon umfasst.

6. Struktur nach Anspruch 1, 2, 3, 4 oder 5, die mindestens eine Schicht umfasst oder daraus hergestellt ist, die das Copolymer umfasst oder daraus hergestellt ist; und mindestens eine Schicht, die Polyamid, ein Ethylen-Vinylalkohol-Copolymer oder Kombinationen davon umfasst oder daraus hergestellt ist, wobei das Polyamid Polyamid 6, Polyamid 9, Polyamid 10, Polyamid 11, Polyamid 12, Polyamid 6,6, Polyamid 6,10, Polyamid 6,12, Polyamid 6/6,6, Polyamid 61, Polyamid 6T, Polyamid 6I,6T, Polyamid 6,9, Polyamid MXD6, Copolymer von Polyamid MXD6, Polyamid-Nanoverbundstoff oder Kombinationen von zwei oder mehreren davon umfasst.

7. Struktur nach Anspruch 1, 2, 3, 4 oder 5, die mindestens eine Schicht umfasst oder daraus hergestellt ist, die das Copolymer und mindestens eine Schicht umfasst oder daraus hergestellt ist, die Polyamid, einschließlich Polyamid 6, Polyamid 6,6, Polyamid 6I,6T, Polyamid MXD6, Polyamid 6/6,6 und Polyamid-Nanoverbundstoffe umfasst oder daraus hergestellt ist, wobei das Copolymer Polyethylenterephthalat-5-Natriumsulfoisophthalat-Terpolymer, eine Mischung von Polyethylenterephthalat-5-Natriumsulfoisophthalat-Terpolymer und Polyetheresterelastomer-Blockcopolymer, eine Mischung von Polyethylenterephthalat-5-Natriumsulfoisophthalat-Terpolymer und Polyethylenterephthalat, eine Mischung von Polyethylenterephthalat-5-Natriumsulfoisophthalat-Terpolymer und Ethylen-Acrylsäure-Copolymer und Ethylen-Methylacrylat-Copolymer, eine Mischung von Polyethylenterephthalat-5-Natriumsulfoisophthalat-Terpolymer und Ethylen-Acrylsäure-Copolymer und Ethylen-n-Butylacrylat-Copolymer umfasst.

8. Struktur nach Anspruch 1, 2, 3, 4 oder 5, die mindestens eine Schicht umfasst oder daraus hergestellt ist, die das Copolymer umfasst oder daraus hergestellt ist; und mindestens eine Schicht, die ein Ethylen-Vinylalkohol-Copolymer umfasst oder daraus hergestellt ist.

9. Artikel, der eine Mehrschichtstruktur umfasst oder daraus hergestellt ist, wobei der Artikel ein spritzgegossener hohler Artikel, eine blasgeformte Flasche oder beides ist; die Struktur wie in Anspruch 1, 2, 3, 4, 5 ,6 ,7 oder 8 gekennzeichnet ist; und der Artikel, die Struktur oder beide wahlweise mindestens einen Sauerstofffänger umfassen.

## Revendications

1. Structure à couches multiples comprenant ou produite à partir d'au moins une couche formant noyau interne en adhérence avec au moins une couche externe comprenant ou produite à partir d'un copolymère, qui comprend du polyester et des motifs de répétition dérivés de 0,001 à 7 % en mole d'un comonomère d'acide sulfonique, dans laquelle la structure est co-extrudée, co-injectée, ou des combinaisons de celles-ci; et le comonomère d'acide sulfonique inclut de l'acide sulfobenzène dicarboxylique, un sel de l'acide, un ester de l'acide, un ester du sel, ou des combinaisons de deux ou plusieurs d'entre eux, dans laquelle la couche formant noyau interne comprend ou est produite à partir de polyamide, d'un copolymère d'éthylène/alcool de vinyle, de (poly)chlorure de vinylidène, de copolymère d'éthylène-acétate de vinyle, de copolymère d'éthylène/(méth)acrylate d'alkyle, de polyoléfines et de copolymère de polyoléfines, de polycarbonate, ou de combinaisons de deux ou plusieurs d'entre eux.

2. Structure selon la revendication 1 dans laquelle la couche externe comprend ou est produite à partir (1) du copolymère, (2) d'un mélange de polyester en vrac et du copolymère, ou de combinaisons de (1) et (2); et le comonomère d'acide sulfonique est un sel métallique de l'acide et le sel métallique inclut du sel de calcium, du sel de zinc, du sel de lithium, du sel de sodium, ou des combinaisons de deux ou plusieurs de ceux-ci et le rapport du polyester en vrac au copolymère est de préférence de 0,1:99,9 à 99,9:0,1 ou de 75:25 à 99,9:0,1.

3. Structure selon la revendication 2 dans laquelle le polymère en vrac inclut une composition comprenant au moins environ 65 % en poids, ou au moins environ 80 % en poids, d'homopolymère de poly(téréphtalate d'éthylène), de copolymère de poly(téréphtalate d'éthylène), ou de leurs combinaisons.

4. Structure selon la revendication 3 dans laquelle l'homopolymère de poly(téréphtalate d'éthylène) ou le copolymère de poly(téréphtalate d'éthylène) a une température à l'état fondu s'étendant de 230°C à 258°C ou de 245°C à 258°C et un indice logarithmique de viscosité s'étendant de 0,58 à 1,1 ou de 0,67 à 0,9 ou de 0,67 à 1,1.

5. Structure selon la revendication 1, 2, 3, ou 4 dans laquelle le copolymère inclut un copolyester aléatoire, un copolyester séquencé, ou des combinaisons de ceux-ci.

6. Structure selon la revendication 1, 2, 3, 4, ou 5 comprenant ou produite à partir d'au moins une couche comprenant ou produite à partir du copolymère; et d'au moins une couche comprenant ou produite à partir de polyamide, d'un copolymère d'éthylène/alcool de vinyle ou de combinaisons de ceux-ci dans laquelle le polyamide inclut du polyamide 6, polyamide 9, polyamide 10, polyamide 11, polyamide 12, polyamide 6,6, polyamide 6,10, polyamide 6,12, polyamide 6/6,6, polyamide 6I, polyamide 6T, polyamide 6I,6T, polyamide 6,9, polyamide MXD6, un copolymère de polyamide MXD6, un nanocomposite de polyamide, ou des combinaisons de deux ou plusieurs d'entre eux.

7. Structure selon la revendication 1, 2, 3, 4, ou 5 comprenant ou produite à partir d'au moins une couche comprenant ou produite à partir du copolymère et d'au moins une couche comprenant ou produite à partir de polyamide incluant du polyamide 6, polyamide 6,6, polyamide 6I,6T, polyamide MXD6, polyamide 6/6,6, et des nanocomposites de polyamide dans laquelle le copolymère inclut un terpolymère de poly(téréphtalate d'éthylène) 5-sodium sulfoisophtalate, un mélange de terpolymère de poly(téréphtalate d'éthylène) 5-sodium sulfoisophtalate et d'un copolymère séquencé élastomère de polyétherester, un mélange de terpolymère de poly(téréphtalate d'éthylène) 5-sodium sulfoisophtalate et de poly(téréphtalate d'éthylène), un mélange de terpolymère de poly(téréphtalate d'éthylène) 5-sodium sulfoisophtalate et de copolymère d'éthylène/acide acrylique et de copolymère d'éthylène/acrylate de méthyle, un mélange de terpolymère de poly(téréphtalate d'éthylène) 5-sodium sulfoisophtalate et de copolymère d'éthylène/acide acrylique et de copolymère d'éthylène/acrylate de n-butyle.

8. Structure selon la revendication 1, 2, 3, 4, ou 5 comprenant ou produite à partir d'au moins une couche comprenant ou produite à partir du copolymère; et d'au moins une couche comprenant ou produite à partir d'un copolymère d'éthylène/alcool de vinyle.

9. Article comprenant ou produit à partir d'une structure multicouche dans lequel l'article est un article creux moulé par injection, une bouteille moulée par soufflage, ou les deux; la structure est telle que caractérisée selon la revendication 1, 2, 3, 4, 5, 6, 7, ou 8; et l'article, la structure, ou les deux comprend(nent) optionellement au moins un agent de piégeage d'oxygène.
